# EUROPEAN PATENT APPLICATION

(11) **EP 0 768 253 A1**
(43) Date of publication of application: **16.04.1997**
(21) Application number: 96115804.5
(22) Date of filing: 02.10.1996
(51) Int. Cl.: B65G 21/14, B65G 43/08, B65G 47/31

(54) **Apparatus for feeding a receiving machine, particularly a packaging machine, with conveyed products**

(30) Priority: 11.10.1995 IT BO950485
(71) Applicant: NUOVA FIMA IMBALLAGGI S.r.l., I-40069 Zola Predosa (Bologna) (IT)
(72) Inventor: Tartarini, Cesare, 40069 Zola Predosa (Bologna) (IT)
(74) Representative: Modiano, Guido, Dr.-Ing.

(57) **Abstract**

An apparatus for feeding a receiving machine, particularly a packaging machine, with conveyed products comprising: a first conveyor belt (66) that is actuated continuously and forms a first horizontal portion (78); a second conveyor belt (58) that forms a second horizontal portion (59); the belts (66,58) being guided by respective rollers (38,39) that are mounted on a slider (31) that is movable parallel to the portions and being mutually adjacent, so as to allow the products to pass from the first portion onto the second portion; motor means (41,40;25,28) for imparting an advancement motion or a halting command to the second belt and an advancement or return motion to the slider (31); a stationary detection element (111) arranged along the first portion (78); and a movable detection element (109) mounted on the slider (31) downstream of the stationary detection element (111); the detection elements (109;111) being associated with means for controlling the motor means (40;25,28) so that the products advance without relative motions with respect to the conveyor belts (66;58).

## Description

The present invention relates to an apparatus for feeding a receiving machine, particularly a packaging machine, with conveyed products.

Conventional devices for feeding a packaging machine consist of a belt or ribbon conveyor onto which the products arriving from a dispensing machine are transferred.

If the productivity of the dispensing machine is uneven, i.e., if it is affected by fluctuations or is different from the productivity of the packaging machine, it is necessary to control the flow of delivered products in order to release them in step with the pick-up cycle of the packaging machine.

This control is usually performed by providing a barrier which is controlled in step with the packaging machine and against which the products accumulate due to the friction produced by the belt running below them.

The conventional apparatus entails the drawback that certain products suffer damage if they are subjected to friction.

This is the case of some food products, such as chocolates, in which erosion of the bottom, caused by friction against the belt whereon they rest, produces not only a deterioration of the product but also the gradual formation, on the conveyor belt, of a layer of chocolate particles that must be removed.

A principal aim of the present invention is to provide an apparatus that allows to accumulate the incoming products and transfer them towards the packaging machine, substantially eliminating friction against the conveyance surface and therefore the risk of damage.

This aim is achieved with an apparatus the characteristics whereof are defined in the appended claims.

Further characteristics and advantages of the present invention will become apparent from the following detailed description of a preferred embodiment, thereof illustrated only by way of non-limitative example in the accompanying drawings, wherein:
figure 1 is a lateral elevation view of the apparatus, taken along the plane I-I of figure 2;
figure 2 is a plan view of the apparatus, with some parts shown in cross-section along the plane II-II of figure 3;
figure 3 is a sectional view, taken along the plane III-III of figure 2;
figure 4 is a sectional view, taken along the plane IV-IV of figure 2;
figure 5 is a plan view, taken at the level of the plane V-V of figure 1;
figure 6 is a sectional view, taken along the plane VI-VI of figure 5.

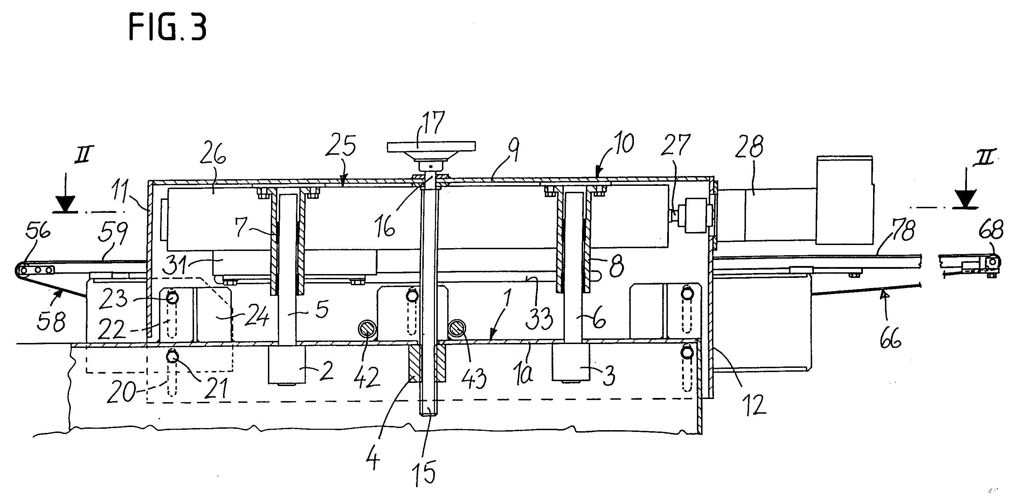

With reference to the above figures, the apparatus comprises a box-like footing 1 (figure 3) with an upper surface 1a below which two lateral bushes 2, 3 and an intermediate bush 4 are fixed, said bushes being arranged on a vertical plane with respect to the upper surface 1a.

Two cylindrical posts 5 and 6 are fixed in the lateral bushes 2 and 3, protrude vertically from the plane 1a, and act as sliding guides for respective sleeves 7 and 8.

The sleeves 7 and 8 have an upper flange-shaped end, through which they are fixed to the upper horizontal surface 9 of a box-like body 10 having a rectangular prism-like shape which is open in a downward region.

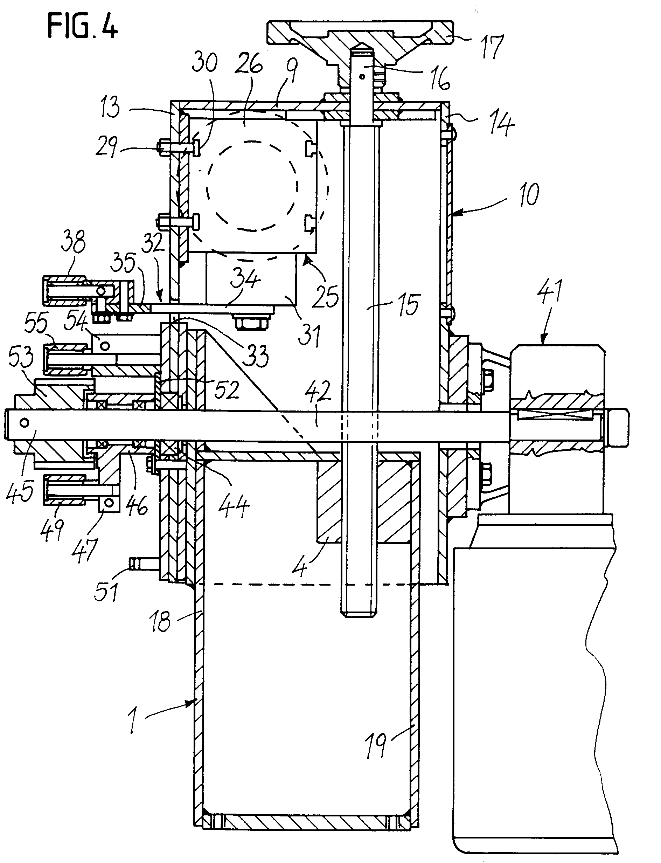

The box-like body 10 comprises two transverse walls 11 and 12 and two longitudinal walls 13 and 14 (figure 4) that descend from the edges of the upper surface 9 so as to cover the upper part of the footing 1.

The central bush 4 is threaded, and a rod 15 is screwed therein; the upper portion of said rod forms a stem 16 which is rotatably supported on the surface 9. A handwheel 17 is rotationally rigidly coupled to the stem 16 and its actuation raises or lowers the box-like body 10 with respect to the footing 1.

The longitudinal wall 13 of the box-like body 10 is flush with one side 18 of the footing 1, whereas the other wall 14 is spaced from the adjacent side 19.

Vertical slots 20 are formed in the wall 13; screws 21 are driven through said slots and engage threaded holes of the side 18. The screws 21 allow to rigidly couple the box-like body 10 to the footing 1 when the box-like body 10, by acting on the handwheel 17, is arranged at the desired level. For the same purpose, additional vertical slots 22 are formed in the wall 13 and are aligned with the slots 20. The slots 22 are crossed by screws 23 that engage right-angled elements 24 that are welded to the footing 1 flush with the side 18.

A reduction unit, generally designated by the reference numeral 25, is accommodated inside the box-like body 10 and is composed of a casing 26 having a prism-like shape with a square cross-section and inside which a worm screw is supported; the input shaft of said worm screw is designated by the reference numeral 27 and is coupled to an electric motor 28 that is mounted on the transverse wall 12 of the box-like body 10.

The casing 26 is fixed to the wall 13 by means of bolts 29, the head whereof is inserted in longitudinal grooves 30 of the casing 26. By means of this type of fixing, it is possible to adjust in a linear fashion the position of the shell inside the box-like body 10.

The electric motor 28 is of the reversible type, so that it can move forwards or backwards a slider 31 that is associated with the worm screw by means of a female thread.

The slider 31 comprises a bracket 32 rigidly coupled thereto and protruding outside the box-like body 10 through a slot 33 formed horizontally in the wall 13 along a substantial length of said wall.

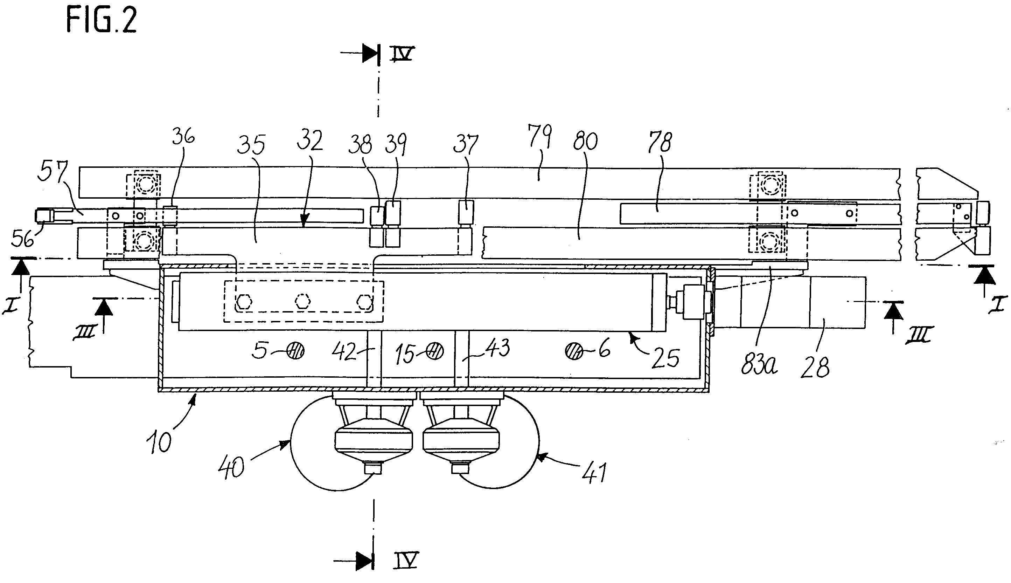

The bracket 32 is T-shaped in plan view (figure 2), with an arm 34 passing through the slot 33 and a portion 35 running parallel to the wall 13. Two blocks for the cantilevered support of two free rollers 36 and 37 are fixed below the ends of said portion 35.

Two similar rollers 38 and 39 are supported in a cantilevered fashion by blocks which are mounted above the portion 35 proximate to the roller 37.

Two gearmotors 40 and 41 are installed on the wall 14 of the box-like body 10 and have output shafts 42 and 43 that run transversely to the box-like body 10 above the footing 1 but below the slot 33.

The shaft 42 (and, in a similar manner, the shaft 43) is supported by a bearing 44 (figure 4) in the wall 13 and protrudes beyond said wall with a portion 45.

The portion 45 rotatably supports a sleeve 46 to which two diametrical arms 47 and 48 are rigidly coupled.

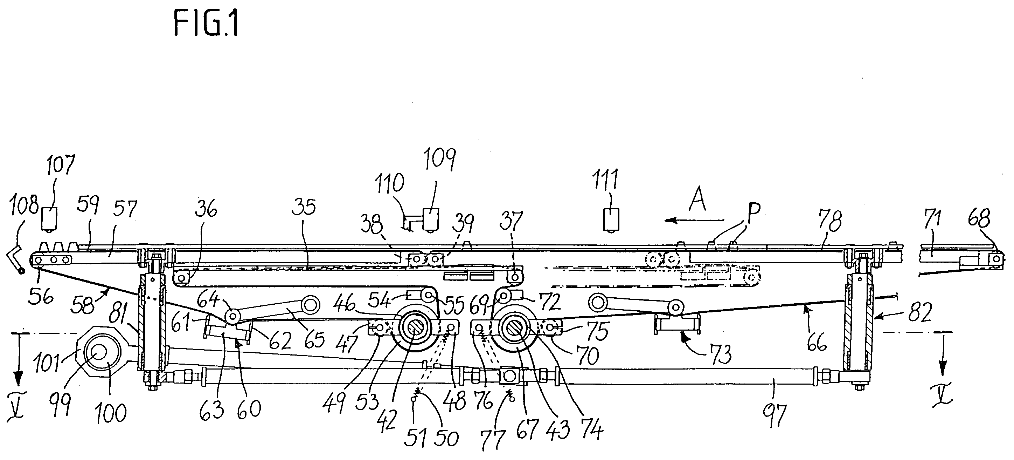

The arm 47 supports a free roller 49 in a cantilevered manner, whereas one end of a traction spring 50 (figure 1) is fixed to the arm 48; the opposite end of said spring is coupled to a pin 51 which is inserted proximate to the lower edge of the wall 13.

The sleeve 46 is arranged between a ring 52 that is fixed to the wall 13, concentrically to the shaft 42, and a roller 53 that is keyed on the portion 45.

A block 54 is fixed to the wall 13, above the sleeve 46, and supports a roller 55 in a cantilevered fashion.

Finally, a roller 56 is rotatably mounted at the end of an arm 57 protruding horizontally from the wall 13 of the box-like body 10.

The driving roller 53 and the rollers 49, 56, 38, 36, and 55 are arranged on a vertical plane, and a belt 58 winds around them. In particular, the rollers 56, 38, 36, and 55 are arranged so that the roller 36 makes contact with the outer face of the belt 58 and so that the belt portions running respectively between the rollers 38 and 56, the rollers 36 and 38, and the rollers 36 and 55 are horizontal and parallel to each other. For the sake of convenience in description, the belt portion running between the rollers 38 and 56 is designated by the reference numeral 59.

A scraper device 60 is arranged along the belt portion that runs between the rollers 49 and 56 and has the purpose of keeping the outer surface of the belt 58 clean.

The scraper device 60 comprises a pair of blades 61 and 62 that are fixed to the ends of a T-shaped element 63 and between which a free roller 64 is pivoted. The element 63 is pivoted about the same rotation axis as the roller 64 at the end of a lever 65 that is articulated to the wall 13.

The plane passing through the cutting edges of the blades 61 and 62 intersects the roller 64, so that the belt 58, guided between the blades and the roller, is forced to follow a path which, due to the tension of the belt 58 produced by the roller 49 as a consequence of the traction of the spring 50, keeps the blades 61 and 62 in contact with the outer surface of the belt 58, allowing the separation of any particles that might adhere thereto during operation of the apparatus.

A second belt 66 cooperates with the belt 58 and is driven by the gearmotor 41 by means of a roller 67, which is keyed to the shaft 43, and a plurality of rollers which, in addition to those mentioned earlier and designated by the reference numerals 37 and 39, comprise the rollers 68, 69, and 70. The roller 68 is supported by a beam 71 protruding from the box-like body 10, whereas the roller 69 is supported in a cantilevered manner by a block 72 rigidly coupled to the wall 13.

The reference numeral 73 designates a scraper device for the belt 66, which is identical to the device 60, and the reference numeral 74 designates the sleeve that is rotatable on the shaft 43 and is provided with the two radial arms 75 and 76 which, together with the spring 77, form the device for tensioning the belt 66.

The rollers 39 and 68 are arranged so that the portion 78 of the belt 66 that lies therebetween is co-planar and aligned with respect to the portion 59 of the belt 58.

The horizontal portions 59 and 78 of the belts 58 and 66 run between two strips 79 and 80 (figure 2) that form the shoulders for guiding the products to be fed. The shoulders 79 and 80 are not rigid but are actuated with mutually opposite motions that allow their mutual approach and spacing.

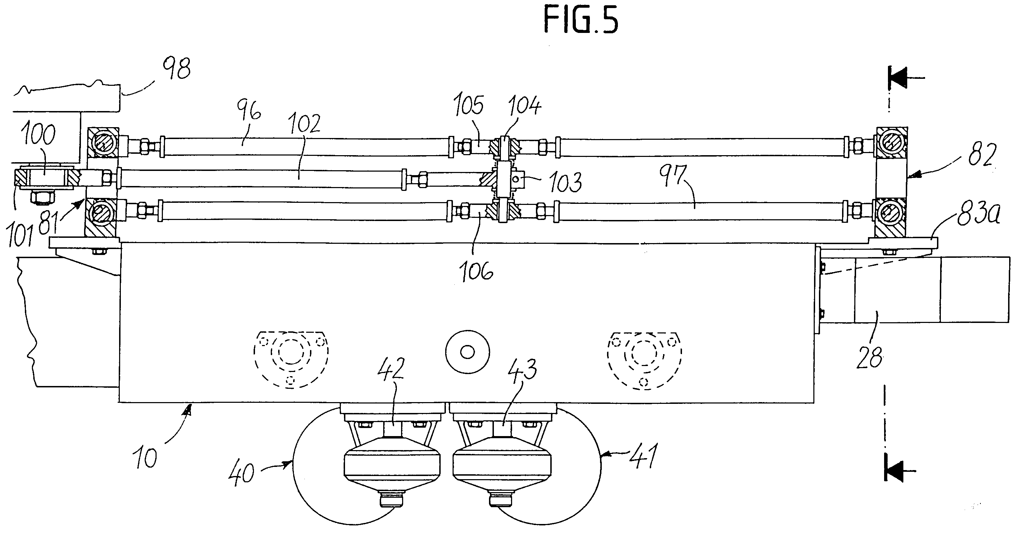

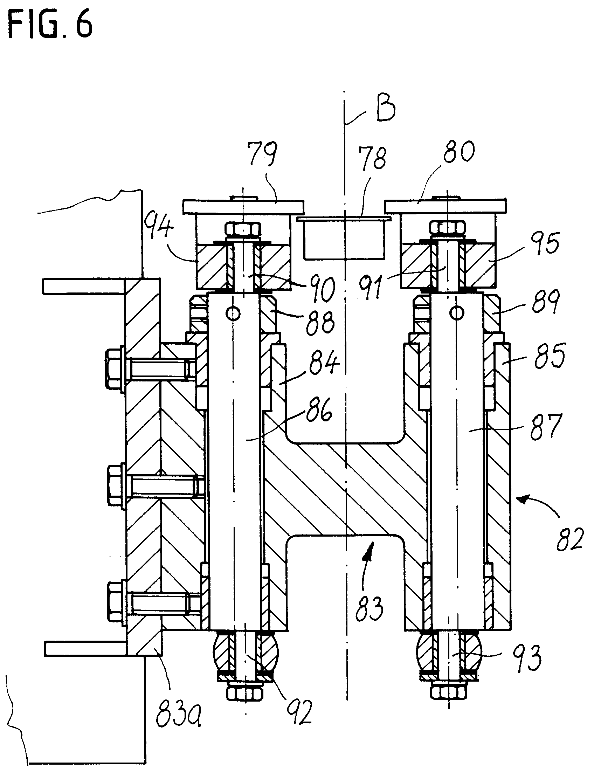

The mutually opposite motion of the shoulders 79 and 80 is produced by two crank systems 81 and 82 (figures 5 and 6) which act on the ends of the shoulders 79 and 80, causing their simultaneous approach and spacing.

Each crank system 81 and 82 is composed (see figure 6) of a support 83 that is fixed to a respective plate 83a rigidly coupled to the respective transverse wall 11 and 12 and co-planar with respect to the longitudinal wall 13.

The support 83 comprises two vertical sleeves 84 and 85, in which two shafts 86 and 87 can rotate by means of bearings; said shafts rest on the sleeve 84 and 85 by means of rings 88 and 89 locked by pins.

Eccentric pivots 90, 91 protrude upwards from the upper end of the shafts 86 and 87, respectively, and eccentric pivots 92, 93 protrude downwards from the lower end of the shafts 86 and 87 respectively. The upper eccentric pivots 90 and 91 can rotate in brackets 94 and 95 to which the shoulders 79 and 80 are fixed. The ends of two respective bars 96, 97 (figure 5) are instead articulated to the lower eccentric pivots 92 and 93; said bars are parallel to the front wall 13 of the box-like body 10. The bars 96 and 97 have a length that keeps the pivots 92 and 93 perfectly opposite to each other and equidistant with respect to the vertical plane B that passes through the centerline of the belt 66. Furthermore, the pivots 92 and 93 are orientated with respect to the bars 96 and 97, so that when said bars are actuated in a reciprocating manner in their direction, the pivots 92 and 93 move substantially in the same direction. More precisely, the pivots 92 and 93 trace arc-like paths the chord whereof is parallel to the bars 96 and 97.

The pivots 90 and 91 are offset by 90^{o} with respect to the respective pivots 92 and 93, so that when a reciprocating back-and-forth motion is imparted to the bars 96 and 97, the shoulders 79 and 80 move toward and away from a centerline plane B.

In order to actuate the bars 96 and 97 there is provided a drive unit 98, on the output shaft 99 whereof an eccentric element 100 is rotationally rigidly coupled (see figures 1 and 5). The small end 101 of a connecting rod 102 is articulated to the eccentric element 100; said connecting rod runs between the bars 96 and 97 and its big end 103 is rigidly connected to a spindle 104 that lies at right angles to the bars 96 and 97.

The opposite ends of the spindle 104 are articulately coupled in median supports 105 and 106 of the bars 96 and 97 so as to allow the ends of the spindle to rotate within the supports as a consequence of the oscillation of the connecting rod 102 and allow the supports 105 and 106 to slide on the opposite ends of the spindle as a consequence of the approach and spacing motion imparted to the bars 96 and 97 by the divergence of the arc-like paths of the pivots 92 and 93 to which they are rigidly coupled.

The described apparatus is completed by three detectors for the products P on the portions 59 and 78 of the belts 58 and 66. A first detector 107 is arranged in a fixed position at the output of the portion 59 and controls the gearmotor 40 that actuates the belt 58 so as to increase or reduce its speed according to the position of the passing product with respect to the position it should have to abut against a stop element 108, whereat the elements meant to pick up each individual product and transfer it to the packaging machine are located.

The pick-up elements of the packaging machine in fact rotate at a fixed rate, and the detector 107 determines whether the incoming product is at the right distance from the stop element 108, in order to allow the belt 58 to make it arrive at the stop point so that the pick-up elements can pick it up and transfer it into the packaging machine. If the detector 107 senses that the product is late or early, by means of an appropriate logic control unit it makes the belt 58 accelerate or slow down, so that the product, along the path between the detector 107 and the stop element 108, can regain the position for the picking up by the pick-up element.

A second detector 109 is supported by an arm 110 fixed on the bracket 32, so as to detect the presence of a product P at the output of the portion 78 of the belt 66, i.e., above the roller 39. The detector 109 controls the reduction unit 25 that actuates the bracket 32 and moves the rollers 36-39 forwards and backwards.

A third detector 111 is arranged in a fixed position at a preset distance that is such as to prevent the roller 39 from moving upstream of the detector 111. The detector 111 controls the actuation of the gearmotor 40 and therefore of the belt 58.

The operation of the described apparatus (assuming a steady-state operating condition, in which the bracket 32, and therefore the rollers 38 and 39, are shifted towards the roller 56 and the products occupy the portion 59 of the belt 58) is as follows. Assume that the belt 58 is not moving and that the belt 66 advances in the direction A. In this situation, any new product P arriving from the belt 66 and stopping against the last product of the portion 59 is detected by the detector 109, which activates the reduction unit 25 so as to move the bracket 32 towards the belt 66, i.e., in the opposite direction with respect to the product advancement direction A.

The movement of the bracket 32 causes an elongation of the portion 59 and a simultaneous shortening of the portion 78. All the incoming products are thus deposited in the initial region of the portion 59 that extends towards the belt 66.

If the flow of incoming products continues, the amount of products on the portion 59 increases until it reaches the detector 111 which, by being activated, starts up the gearmotor 40 and the belt 58.

The products P that are on the portion 59 are therefore moved into abutment against the stop element 108 and are picked up by the pick-up element, which transfers them into the packaging machine.

If the flow of the products fed by the belt 66 decreases, so that the quantity of products on the belt 58 does not keep the detector 109 activated, said detector activates the reduction unit 25, which moves the bracket 32 towards the roller 56, shortening the portion 59 of the belt 58 and lengthening the portion 78 of the belt 66. If no new products arrive so as to activate the detector 109, the stroke of the bracket 32 continues until it stops at the stroke limit of the worm screw 26; when said stroke limit is reached, the belt 58 is halted.

When the belt 58 is halted, the feeding of the packaging machine is temporarily suspended. This suspension continues until, when new products arrive, the detector 109 is reactivated, so that the bracket 32 is moved towards the detector 111 to reconstitute the quantity of products that is necessary to activate the startup of the belt 58.

In practice, if the queue of products on the belts becomes longer upstream, i.e., if it grows backwards along the belts 58 and 66 until even the last product is upstream of the detector 111, the bracket 32 is shifted upstream and the detector 109 is located proximate to the detector 111. In this situation, the belts 58 and 66 move at the same speed in order to transfer the products to the pick-up elements.

If, in this situation, the queue of products decreases downstream of the detector 109, while the advancement of the belts 66 and 58 continues, the bracket 32 is moved downstream, while the products continue to pass without scraping from the belt 66 onto the belt 58.

Finally, when the bracket 32 has reached its downstream stroke limit, if the queue of products decreases until it is downstream of the detector 109, the belt 58 is halted. The arrival of the new products is detected by the detector 109, which actuates the gearmotor 26-18 so that it moves the bracket 32 so as to shorten the portion 78 of the belt 66, in order to allow the new products to be accommodated on the extension of the portion 59 of the belt 58.

As clearly shown, by maintaining a supply flow that is smaller than the one that can be handled by the receiving machine, the products which have accumulated due to excess feeding, are prevented from scraping against the belts and thus being damaged.

For the same purpose, the shoulders 79 and 80, by means of the mutually opposite motion imparted thereto by the crank systems 81 and 82, keep the products centered on the belts along the portions 59 and 78. The walls, in addition to remaining in contact with the products for a very short time, are in fact subjected to an opposite motion that spaces them from the products, reducing friction against said products.

It is also particularly important that the detector 107 allows to put back in step the halting of the products which abut against the element 108 with the intervention of the pick-up element that is meant to transfer them into the receiving machine. The acceleration or deceleration of the belt 58, controlled by the detector 107 according to the offset between the positions of the product and of the pick-up element, in fact prevents the product from remaining too long adjacent to the belt 66 while the belt 58 slides beneath it.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for feeding a receiving machine, particularly a packaging machine, with conveyed products (P), characterized in that it comprises: a first conveyor belt (66) that is closed in a loop and forms a first horizontal portion (78) lying between a stationary roller (68), which is arranged upstream with respect to the product advancement direction (A), and a roller (39) that is arranged downstream and is movable with respect to said first roller; a second conveyor belt (58) that is closed in a loop and forms a second horizontal portion (59) that is aligned with said horizontal portion (78) of said first belt (66) and runs between a movable roller (38) that is arranged upstream with respect to the product advancement direction and a stationary roller (56) that is arranged downstream with respect to said movable roller (38), said movable rollers (38, 39) being mounted on a slider (31) that is guided parallel to said portions and being adjacent to each other, so as to allow the products to pass from said first portion (78) onto said second portion (59); first motor means (41) for imparting a continuous advancement motion to said first belt (66); second motor means (40) for imparting an advancement motion or a halting command to said second belt (58); third motor means (25, 28) for imparting an advancement or return motion to said slider (31); a stationary detection element (111) arranged along said horizontal portion (78) of said first belt (66); and a movable detection element (109) mounted on said slider (31) downstream of said stationary detection element (111); said detection elements (109, 111) being associated with means for controlling said second motor means (40) and said third motor means (25, 28) so that if the flow of products is such as to form a queue reaching upstream of the stationary element (111), the slider (31) is moved into the position for lengthening said second portion (59) and shortening said first portion (78), while the belts (58, 66) travel in the advancement direction at the same speed; if the queue of products decreases downstream of said stationary element (111), the slider (31) is moved into the position for shortening said second portion (59) and lengthening said first portion (78), while the belts (58, 66) move in the advancement direction at the same speed; finally, if the queue of products decreases downstream of said movable element (109), said second belt (58) is halted.

2. An apparatus according to claim 1, characterized in that a third detection element (107) is arranged at the output of said second portion (59) and is adapted to detect the position of the passing product with respect to a stop element (108) that cooperates with elements for picking up the products and transferring them to the receiving machine, means for controlling said second motor means (40) being controlled by said third detection element (107) so that said products abut against said stop element (108) in step with said pick-up elements.

3. An apparatus according to claim 1, characterized in that two additional movable guiding rollers (36, 37) for said first belt (66) and said second belt (58) are arranged on said slider (31) and are suitable to form two respective portions that are parallel and lie below said first portion (78) and said second portion (59), driving rollers (67, 53) for said belts (66, 58) being furthermore provided, the portion of said belts that lies between said additional rollers (36, 37) and said stationary rollers (56, 68) winding around said driving rollers.

4. An apparatus according to claim 3, characterized in that it comprises a slider (31) that is guided parallel to said aligned portions (59, 78) of said belts (58, 66) and a bracket (32) that is rigidly coupled to said slider (31) and supports said movable rollers (38, 39).

5. An apparatus according to claim 4, characterized in that said slider (31) and said driving rollers (53, 67) are supported in a vertically guided box-like body (10), means (15, 17) for the vertical adjustment of said box-like body (10) being provided.

6. An apparatus according to claim 5, characterized in that said motor means (40, 41) for the actuation of said driving rollers (53, 67) of said belts are mounted on said box-like body (10).

7. An apparatus according to one of the preceding claims, characterized in that it comprises two shoulders (79, 80) lying laterally with respect to said belts (58, 66) so as to guide the products during advancement, and motor means (81, 82, 96-106) that are adapted to impart mutually opposite movements to said shoulders (79, 80) so as to keep said products along the axis of said belts (58, 66).

8. An apparatus according to claim 7, characterized in that said motor means comprise two crank systems (81, 82), each system being composed of two vertical sleeves (84, 85) in which respective shafts (86, 87) are rotatable, each one of said shafts being provided, at its opposite ends, with two eccentric pivots (90-93), the upper ones (90, 91) being articulated in the shoulders (79, 80) and the lower ones being articulated in two respective bars (96, 97) that are parallel to said belts, said bars (96, 97) being coupled one another by a spindle (104) to which a connecting rod (102) is connected, said connecting rod being moved by an eccentric element (100) keyed to the output shaft of a driving unit (98), said spindle (104) being adapted to allow movements of the bars (96, 97) parallel to themselves and said eccentric pivots (90-93) being offset so as to produce mutually opposite movements of said shoulders (79, 80).
